# EUROPEAN PATENT APPLICATION

(11) **EP 0 680 188 A2**
(43) Date of publication of application: **02.11.1995**
(21) Application number: 95250074.2
(22) Date of filing: 27.03.1995
(51) Int. Cl.: H04M 1/72

(54) **Cordless telephone adapted for use with a corded digital telephone**

(30) Priority: 28.04.1994 US 234062
(71) Applicant: UNIDEN AMERICA CORPORATION, Ft. Worth Texas 76155 (US)
(72) Inventor: Ohashi, Susumu, Coppell, TX 75019 (US); Baba, Yoshihiko, c/o Uniden Corporation, Ischikawa-shi, Chiba 272 (JP); Lipp, Ronald L., Snellville, Georgia 30278 (US); Osonoe, Ken-Ichi, c/o Uniden Corporation, Ichikawa-shi, Chiba 272 (JP)
(74) Representative: UEXKÜLL & STOLBERG

(57) **Abstract**

A telephone system comprising a corded telephone, an analog cordless telephone with a signal I/O terminal connected to a voice I/O terminal of the corded telephone and having a control signal output terminal for outputting an ON/OFF control signal corresponding to a position of a talk switch of a analog cordless telephone, and a hook switch ON/OFF device having a control signal input terminal for inputting an ON/OFF control signal output from the control signal output terminal of the analog cordless telephone and turning ON/OFF the hook switch of the corded telephone according to the ON/OFF control signal; wherein the hook switch of the corded telephone is turned ON/OFF using the hook switch ON/OFF device by means of operating the talk switch of the analog cordless telephone to send or receive voice using the analog cordless telephone.

## Description

### Technical Field of the Invention

The present invention relates to cordless telephones. In one embodiment, a cordless telephone is adapted to interface to a corded telephone operating in conjunction with a digital PBX.

### Background of the Invention

Recent advancements in office communications have provided sophisticated equipment which offer a broad range of features. Much of this equipment is supported by and interfaces to the modern private area branch exchange telephone switch, (hereinafter referred to as a PBX). Previously, analog technology was employed in PBX equipment. As such, communications through the PBX has utilized analog circuit technology.

The majority of modern PBX installations are now employing digital communications technology. This technology supports the features and advancements mentioned above. The telephone sets which interface to a digital PBX must also communicate using digital signaling. Therefore, voice message are converted from analog signals to specific digital communications signals, according to the design of the particular PBX the telephone set is intended to interface to. This type of telephone set ,also known as a digital telephone set, comprises a CODEC function that converts analog signals to digital signals and digital signals to analog signals.

Furthermore, the signaling between the modern digital PBX and the public switched telephone network, (hereinafter referred to as the PSTN), may also be via digital signaling, as opposed to analog signaling.

A digital telephone set has a handset for transducing the audio transmit and receive signals, or voice messages, into audio signals which are coupled to a telephone base unit via a wire or cord. Within the base unit, the CODEC transforms the analog signals into digital signals. The digital signals are then coupled to the digital PBX, or a digital telephone line, according to a defined protocol.

A cordless telephone set is similar to the aforementioned telephone set except the cord or wire interconnecting the handset and base units is replaced with a radio link. A cordless telephone makes it possible for users to send and receive voice messages over longer distances, by virtue of the removal of the cord, and also eliminates the inconvenience of the cord, such as tangling, and etc. Even though the cordless telephone set utilizes a radio link between the handset and base unit, the connection to the PSTN, or PBX, is similar to the telephone set in that a cord or wire is used to accomplish the interconnection.

Considering the foregoing, a conventional, or corded, telephone set may be of the type that communicates using either digital or analog signaling, and likewise, a cordless telephone set may be of the type that communicates using either digital of analog signaling. In any case, the term digital or analog is derived from the communications protocol between the base unit and the PSTN or PBX. It does not refer to the RF modulation or signaling protocol used between the base unit and the handset.

In recent years, in association with the deployment of digital PBX systems, a large number of corded digital telephone sets have been deployed. However, there has not been a large deployment of digital cordless telephone sets. Digital telephone sets are more expensive that analog telephone sets, and this may account for the reason that there has not been a large deployment of digital cordless telephone sets.

Conversely, the has been a large deployment of analog cordless telephone sets in the private sector. Clearly demonstrating that a demand exists for cordless telephone sets. The large scale deployment of analog cordless telephone sets has caused the economies of scale to reduce the price of such units to an affordable level.

There is a demand for an affordable cordless telephone set which can be utilized in digital telephone systems such as digital PBX systems, digital key telephone system, or over a digital telephone line linked directly to the PSTN.

### Summary of the Invention

It is an object of the present invention to provide a telephone system which can be used by connecting a low price cordless telephone set thereto.

In a telephone system according to the present invention, voice messages are sent and received using an analog cordless telephone set by operating a talk switch on the analog cordless telephone set and using a hook switch ON/OFF device working according to an ON/OFF control signal correlating to the talk switch to turn ON/OFF a hook switch of the corded telephone set.

In a telephone system according to the present invention, voice messages are sent and received using an analog cordless telephone set by operating a talk switch on the analog cordless telephone set and using a hook switch ON/OFF device working according to an ON/OFF control signal correlating to the talk switch to turn ON/OFF the hook switch of the corded telephone set.

In a telephone system according to the present invention, voice messages are sent and received between a corded telephone set and an analog cordless telephone set by changing an array of a plurality of signal lines input via a signal I/O terminal to an array of signal lines which can be processed by the analog cordless telephone with an interface means in the analog cordless telephone set and also changing an array of signal lines output via the signal I/O terminal to an array of signal lines which can be processed by the corded telephone set.

In a telephone system according to the present invention, voice messages are sent and received through radio communication between a handset of an analog cordless telephone set and a base unit of the analog cordless telephone set and also voice messages are sent and received between the analog cordless telephone set and a corded telephone set through corded communication via a voice I/O terminal of the corded telephone set and a signal I/O terminal of the corded telephone set.

In a telephone system according to the present invention, voice messages are sent and received using an analog cordless telephone set by operating a talk switch of an analog cordless telephone set and also using a call/non-call shifting means to switch operating mode of a corded telephone set to a calling state or a non-calling state and a ringer sound is output from the analog cordless telephone set when a ringer sound is detected by the corded telephone set and the incoming call is accepted.

In a telephone system according to the present invention, a ringer sound is detected by detecting a sound or vibration from a corded telephone set with a ringer sound detecting means.

In a hook switch ON/OFF method in a telephone system according to the present invention, a separating member for releasing a handset from a hook switch is provided between a base unit of a corded telephone set and the handset thereof and the hook switch of the corded telephone set is turned ON/OFF by releasing/placing the handset on or off the hook switch with the separating member according to a signal from the talk switch of the analog cordless telephone set.

In a hook switch ON/OFF device in a telephone system according to the present invention, the hook switch is turned ON/OFF by moving the separating member provided between a base unit of a corded telephone set and a handset thereof in the vertical direction to release the handset from the hook switch according to a signal from a talk switch of an analog cordless telephone set.

In a hook switch ON/OFF device in a telephone system according to the present invention, a frame with a separating member, a solenoid, and a driving motor packaged therein by a fixing means is fixed at a position near a handset of a corded telephone set.

In a telephone system according to the present invention, voice messages are sent and received using a second telephone set by operating a talk switch of the second telephone set which can not send nor receive voice messages following the digital PBX communication protocol and using a call/non-call shifting means to switch the operating mode of a first telephone set which can send and receive voice messages following the digital PBX protocol to a calling state or a non-calling state.

In a telephone system according to the present invention, voice messages are sent and received (first call) using a second telephone set by operating a talk switch of a second telephone set which can not send nor receive voice messages following the digital PBX communication protocol and using a call/non-call shifting means to switch operating mode of a first telephone set which can send and receive voice messages following the digital PBX communication protocol. Also voice messages are sent and received using a handset of the first telephone set (second call).

In a telephone system according to the present invention, an array of a plurality of signal lines input via a signal I/O terminal is changed to an array of signal lines which can be processed by the analog cordless telephone with an interface means in a second telephone set, and an array of signal lines output via the signal I/O terminal to an array of signal lines processable by a first telephone set.

In a telephone set according to the present invention, in sending and receiving voice messages using said second telephone set, the voice messages are sent and received through radio communication between a handset of said second telephone set and the base unit thereof, and in sending and receiving voice messages between said second telephone set and a first telephone set, the voice messages are sent and received through corded communication via a voice I/O terminal of said first telephone set and a signal I/O terminal of the first telephone set.

In a telephone system according to the present invention, voice messages are sent and received using a second telephone set by operating a talk switch of the second telephone set which can not send nor receive voice messages following the digital PBX communication protocol and using a call/non-call shifting means to switch operating mode of the first telephone set which can send and receive voice messages following the digital PBX protocol, and a ringer sound from the second telephone set is output when a ringer sound from the first telephone set is detected and the incoming call is accepted.

In a telephone system according to the present invention, a ringer sound is detected by detecting a sound or vibration from a first telephone set with a ringer sound detecting means.

In a hook switch ON/OFF method in a telephone system according to the present invention, a separating member for releasing/placing a handset from/on a hook switch is provided between a base unit of a first telephone set which can send and receive voice messages following the specific digital PBX communication protocol, and the hook switch of the first telephone set is turned ON/OFF by releasing/placing the handset from/on the hook switch with the separating member according to a signal from a talk switch of a second telephone set which can not send nor receive voice messages following the digital PBX communication protocol.

In a hook switch ON/OFF device in a telephone system according to the present invention, the hook switch is turned ON/OFF by moving in the vertical direction the separating member provided between a base unit of a first telephone set which can send and receive voice messages following the specific digital PBX communication protocol to release the handset from the hook switch with the separating member according to a signal from a talk switch of a second telephone set which can not send nor receive voice messages following the specific digital PBX communication protocol.

In a hook switch ON/OFF device in a telephone system according to the present invention, the hook switch is turned ON/OFF by moving in the vertical direction, a separating member provided between a base unit of a first telephone set which can send and receive voice messages following the specific digital PBX communication protocol to separate the handset from the hook switch with the separating member according to a signal from a talk switch of a second telephone set which can not send nor receive voice messages following the specific digital PBX communication protocol. Also a frame with a separating member, a solenoid, and a driving motor packaged therein is fixed at a position near the handset of the first telephone set with a fixing means.

In a telephone system according to the present invention, voice messages are sent and received using a second telephone set by operating a talk switch of the second telephone set not having a CODEC function for converting a digital signal input from a digital line to an analog signal and using a call/non-call shifting means to switch operating mode of a first telephone set having the CODEC function for converting a digital signal input from a digital line to an analog signal to a calling state or a non-calling state.

In a telephone system according to the present invention, voice messages are sent and received (first call) using a second telephone set by operating a talk switch of a second telephone set not having a CODEC function for converting a digital signal input from a digital line to an analog signal and using a call/non-call shifting means to switch operating mode of a first telephone set having the CODEC function for converting a digital signal input from a digital line to an analog signal. Also voice messages are sent and received using the handset of the first telephone set (Second call).

In a telephone system according to the present invention, an array of a plurality of signal lines input via a signal I/O terminal is changed to an array of signal lines processable by the analog cordless telephone by an interface means of a second telephone set not having a CODEC function for converting a digital signal input from a digital line to an analog signal, and also an array of signal lines output via the signal I/O terminal are changed to an array of signal lines processable by a first telephone set.

In a telephone system according to the present invention, in sending and receiving voice messages using a second telephone set not having a CODEC function for converting a digital signal input from a digital line to an analog signal the voice messages are sent and received through radio communication between a handset of the second telephone set and a base unit thereof, and in sending and receiving voice messaged between the second telephone set and the first telephone set, the voice messages are sent and received through corded communication via an voice I/O terminal of the first telephone set and a signal I/O terminal thereof.

In a telephone system according to the present invention, voice messages are sent and received (first call) using a second telephone set by operating a talk switch of a second telephone set not having a CODEC function for converting a digital signal input from a digital line to an analog signal and using a call/non-call shifting means to switch operating mode of a first telephone set having the CODEC function for converting a digital signal input from a digital line to an analog signal, and a ringer sound is output from the second telephone set when a ringer sound from the first telephone set is detected and the incoming call is accepted.

In a telephone system according to the present invention, a ringer sound is detected by detecting a sound or vibration from a first telephone set with a ringer sound detecting means.

In a hook switch ON/OFF method in a telephone system according to the present invention, a hook switch of a first telephone set having a CODEC function for converting a digital signal input from a digital line to an analog signal is turned ON/OFF by releasing a handset from a hook switch with a separating member according to a signal from a talk switch of a second telephone set having the CODEC function for converting a digital signal input from a digital line to an analog signal.

In a hook switch ON/OFF device in a telephone system according to the present invention, a hook switch is turned ON/OFF by moving in the vertical direction a separating member provided between a base unit of a first telephone set having a CODEC function for converting a digital signal input from a digital line to an analog signal and a handset thereof to release the handset from the hook switch with the separating means according to a signal from a talk switch of a second telephone set not having the CODEC function for converting a digital signal input from a digital line to an analog signal.

In a hook switch ON/OFF device in a telephone system according to the present invention, a hook switch is turned ON/OFF by moving in the vertical direction a separating member provided between a base unit of a first telephone set having a CODEC function for converting a digital signal input from a digital line to an analog signal to release the handset from the hook switch with the separating member according to a signal from a talk switch of a second telephone set not having the CODEC function for converting a digital signal input from a digital line to an analog signal. Also a frame with a separating member, a solenoid, and a driving motor packaged therein is fixed at a position near a handset of the first telephone set with a fixing means.

In a hook switch ON/OFF device in a telephone system according to the present invention, a frame is fixed at a position near a handset of a first telephone set with a fixing means comprising a Velcro(R) fastener.

In a telephone system according to the present invention, the hook switch ON/OFF device is monolithically molded with or integrated to an analog cordless telephone set or a second telephone set, and by mounting the analog cordless telephone set or the second telephone set near a corded telephone set or a first telephone set, the separating means can be located under the handset thereof.

In a telephone system, according to the present invention, the hook switch ON/OFF device is engaged in an engaging section formed in an analog cordless telephone set or a second telephone set, thus the hook switch ON/OFF device being integrated to the telephone set.

Other objects and features of this invention will become understood from the following description with reference to the accompanying drawings.

### Brief Description of the Drawings

Fig. 1 is a block diagram illustrating a telephone system according to Embodiment 1 of the present invention;
Fig. 2 is an appearance view showing the telephone system according to Embodiment 1;
Fig. 3 is an explanatory view illustrating a circuit diagram of an analog cordless telephone set according to Embodiment 1;
Fig. 4 is an explanatory view illustrating configuration of a hook switch ON/OFF device according to Embodiment 1;
Fig. 5 is an explanatory view illustrating general configuration of a corded telephone set;
Fig. 6 is an explanatory view illustrating a method of mounting a hook switch ON/OFF device;
Fig. 7 is an explanatory view illustrating operation in Embodiment 1;
Fig. 8 is a timing chart for Embodiment 1;
Fig. 9 is a block diagram illustrating a telephone system according to Embodiment 2 of the present invention;
Fig. 10 is an explanatory view illustrating a circuit diagram of an analog cordless telephone set according to Embodiment 2;
Fig. 11 is an explanatory view illustrating a method of mounting a hook switch ON/OFF device according to Embodiment 3 of the present invention;
Fig. 12 is an explanatory view illustrating a variation of the method of mounting according to Embodiment 3;
Fig. 13 is an explanatory view illustrating configuration of a hook switch ON/OFF device according to Embodiment 4 of the present invention;
Fig. 14 is an explanatory view illustrating configuration of the hook switch ON/OFF device according to Embodiment 4:
Fig. 15 is an explanatory view configuration of a base unit as well as a hook switch ON/OFF device according to Embodiment 5 of the present invention;
Fig. 16 is an explanatory view illustrating a state where an analog cordless telephone set has been connected and fixed to a corded telephone set in Embodiment 5;
Fig. 17 is an explanatory view illustrating a tightening tool in Embodiment 6; and
Fig. 18 is an explanatory view illustrating a state where an analog cordless telephone set has been connected and fixed to a corded telephone set with the tightening tool according to Embodiment 6 of the present invention.

### Description of the Preferred Embodiments

Now detailed description is made hereinafter to the telephone system according to the present invention, a hook switch ON/OFF method in the telephone system, and a hook switch ON/OFF device in the telephone system with reference to the related drawings in the order of [Embodiment 1], [Embodiment 2], [Embodiment 3], [Embodiment 4] and [Embodiment 5].

### [Embodiment 1]

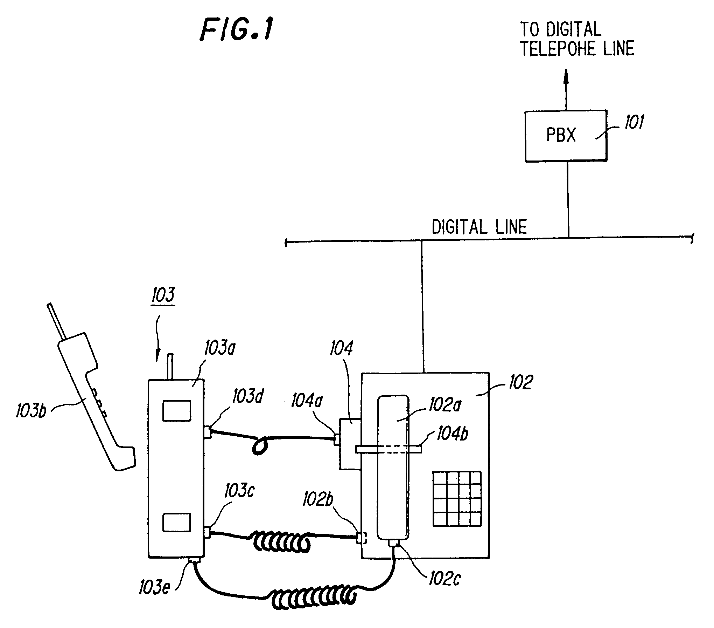

Fig. 1 shows configuration of a telephone system according to Embodiment 1 of the present invention, and the telephone system comprises a digital PBX 101 with the digital telephone line connected to a private digital telephone network, a corded telephone set 102 connected to the digital PBX 101, an analog cordless telephone set 103 connected to the corded telephone set 102, and a hook switch ON/OFF device 104 for turning ON/OFF a hook switch of the corded telephone set 102.

Also in this figure, designated at the reference numeral 102a is a handset of the corded telephone set 102 , at 102b a voice I/O terminal of the corded telephone set 102, at 102c a voice I/O terminal of the hand set 102a, at 103a a base system (or a base unit) of the analog cordless telephone set 103, at 103b a handset of the analog cordless telephone set 103, at 103c a signal I/O terminal of the analog cordless telephone set 103, at 103d a control signal output terminal for outputting an ON/OFF control signal corresponding to a talk switch of the analog cordless telephone set 103, at 103e a voice I/O terminal of the analog cordless telephone set 103 to which the voice I/O terminal of the handset 102a is connected , at 104a a control signal input terminal of the hook switch ON/OFF device 104 for inputting thereinto an ON/OFF control signal output from the control signal output terminal 103d, and at 104b a separating member for the hook switch ON/OFF device 104 provided between a base unit of the corded telephone set and the handset 102a thereof.

As shown in this figure, the corded telephone set 102 connected to the digital PBX can send and receive voice messages following the digital PBX communication protocol, and incorporates a CODEC circuit (CODEC) for converting a digital signal input from a digital line to an analog signal.

The signal I/O terminal 103c of the analog cordless telephone set 103 is connected to the voice I/O terminal 102b of the corded telephone set 102, the control signal output terminal 103d for outputting an ON/OFF control signal corresponding to a talk switch of the analog cordless telephone is connected to the control signal input terminal 104a of the hook switch ON/OFF device 104, and the handset 102a of the corded telephone set 102 is connected to the voice I/O terminal 103e.

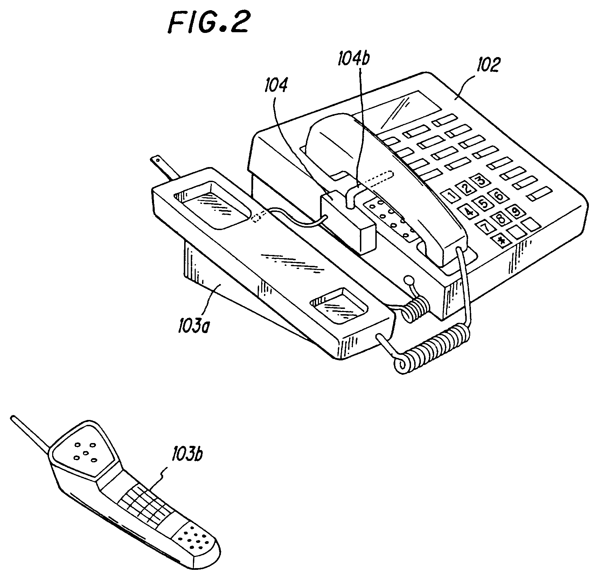

Fig. 2 shows an appearance of the telephone system according to Embodiment 1. The hook switch ON/OFF device 104 is attached to the corded telephone set 102 with a specified fixing means described hereinafter, and the base unit 103a of the analog cordless telephone set 103 is provided near the corded telephone set 102 in the state as described above where the terminals described above are connected to each other. As the handset 103b of the analog cordless telephone set 103 can be carried freely in this state, so that a user can freely move in a range where radio communication between the base unit 103 and the handset 103b is possible.

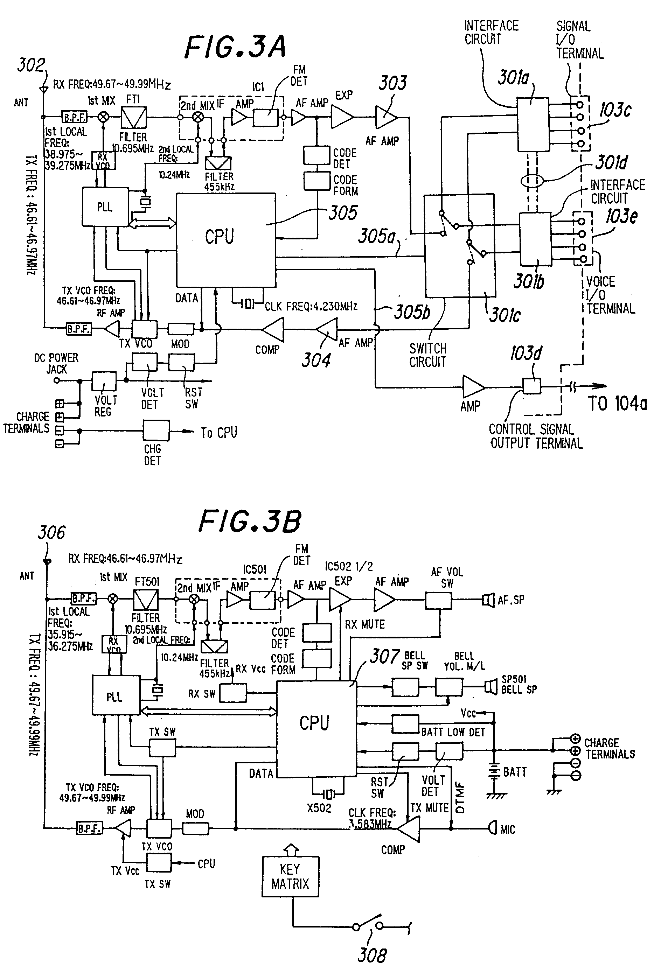

Fig. 3A shows a circuit diagram of the base unit 103a, and Fig. 3B shows a circuit of the handset 103b.

The base unit 103a comprises an interface circuit 301a which changes an array of four signal lines input via the signal I/O terminal 103c from the corded telephone set 102 to an array of two signal lines processable by the analog cordless telephone and also changes an array of signal lines output via the signal I/O terminal 103c to an array of four signal lines processable by the corded telephone set 102, an interface circuit 301b which changes an array of four signal lines input via the voice I/O terminal 103e from the handset 102a to an array of two signal lines which can be processed by the analog cordless telephone and also changes an array of signal lines output via the voice I/O terminal 103e to the handset 102a to an array of four signal lines, and a switch circuit 301c which selects two signal lines input via the signal I/O terminal 103c and the interface 301a into inside of devices in the side of amplifiers 303, 304, or outputting the two signal lines via the interface circuit 301b and the voice I/O terminal 102a into the handset 102a.

It should be noted that, as conventional circuits can be used as the interface circuit 310a and the interface circuit 301b, detailed description concerning the circuits above is omitted herein. For instance, however two of four signal lines are connected from the interface circuit 301a to the switch circuit 301c, and the remaining two signal lines may be connected, as indicated by the dotted line in the figure, to two corresponding signal lines in the interface circuit 301b. In other words, two of four signal lines are connected from the interface circuit 301b to the switch circuit 301c, and the remaining two signal lines may be connected, as indicated by the dotted line 301d, to the two corresponding signal lines in the interface circuit 301a.

An operation for switching this switch circuit 301c is executed, when a talk switch 308 of the handset 103b is depressed, by a CPU 305 by means of outputting an ON/OFF control signal corresponding to the talk switch 308 via the signal line 305a to the switch circuit 301c for selecting a switch position according to the ON/OFF control signal.

The ON/OFF control signal output from the CPU 305 is input via the signal line 305b and the control signal output terminal 103d into the control signal input terminal 104a (hook switch ON/OFF device 104).

In the handset 103b is provided a talk switch 308, and voice messages are sent and received by using the analog cordless telephone set 103, or when the call is over, the talk switch which is an ON/OFF switch is depressed, and ON/OFF of the talk switch 308 is reported by the CPU 307 to the base unit 103a. It should be noted that the reference numerals 302 and 306 in this figure indicate an antenna respectively. Other portions of the configuration are the same as that of a general analog cordless telephone set such as a CORDLESS TELEPHONE MODEL No. XC340 and it is Service Information Manual, Made by Uniden Corporation and Sold by Uniden America Corporation, of which disclosure is incorporated herein by the references.

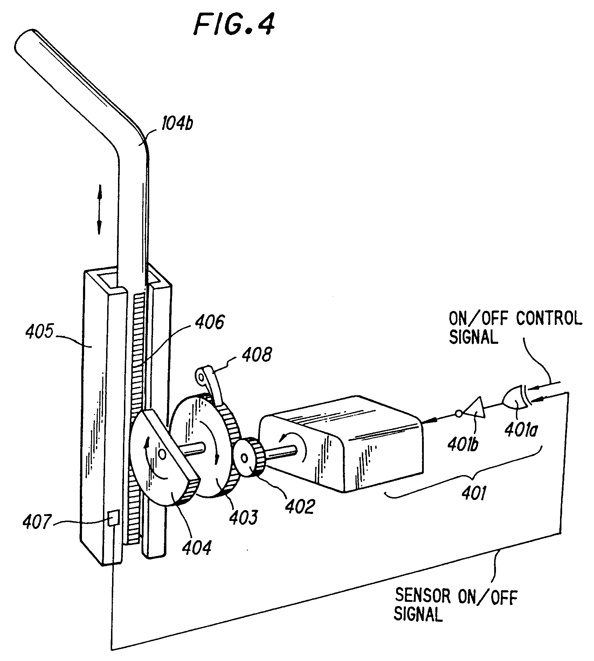

Fig. 4 shows configuration of a hook switch ON/OFF device 104 according to Embodiment 1 of the present invention comprising a driving motor 401 for receiving an ON/OFF control signal from the analog cordless telephone set 103 and starting driving, a small gear 402, a large gear 403, and a semi-circular gear 404 each rotating when driven by the driving motor 401, a rail member storing the separating member 104b movably in the vertical direction with an opening provided on a surface contacting the semi-circular gear 404, a gear section 406 provided on a surface on the separating member 104b so that said gear section 406 engages the semi-circular gear 404 at a position of the opening of the rail member 405, an ON/OFF sensor 104b located at a position where the separating member 104b can not be detected when the separating member 104b goes up by a specified distance, outputting a sensor ON signal when the sensor 407 contacts the separating members 104b (called ON hereinafter), and outputting a sensor OFF signal when the sensor does not contact the separating member 104b (called OFF hereinafter), and a gear stopper 408 for stopping rotation of the large gear 403 to inhibit downward movement of the separating member 104b in a state where the semi-circular gear 404 has engaged the gear section 406 and operation of the driving motor 401 has been stopped.

It should be noted that the driving motor 401 has, as shown in the figure, an XOR gate 401a and an inverter, and the XOR gate 401a outputs an exclusive logical sum of the ON/OFF control signal and the sensor ON/OFF signal, the signal is inverted by the inverter 401b, so that the driving motor 410 starts its rotation when output from the inverter 401b is ON, and stops its rotation when the output is OFF.

Also it should be noted that each part is packaged in the frame as shown in the appearance drawing in Fig. 2, thus the hook switch ON/OFF device 104 being assembled.

With the configuration as described above, when an ON/OFF control signal (PN signal herein) is input, the driving motor 401 rotates the small gear 402, the large gear 403, and the semi-circular gear 404. When this rotation is started, a lower section of the separating member 104b turns ON the ON/OFF detection sensor 407, so that a sensor ON signal is output from the ON/OFF detection sensor 407 to the driving motor 401.

In association with rotation of the driving motor 401, the semi-circular gear 404 engaging the gear section 406 rotates and moves the separating member 104b upward. When the separating member 104b furthermore moves upward and the lower section thereof turns OFF the ON/OFF detection sensor 407, a sensor OFF signal is output from the ON/OFF detection sensor 407 to the driving motor 401.

When the sensor OFF signal is input into the driving motor 401, the driving motor 401 stops its rotation, the stopper 408 engages the large gear 403 and stopped in a state where the semi-circular gear 404 engages the gear section 406. In other words, the driving motor 410 stops with the separating member 104b having been moved upward.

Then, when an ON/OFF control signal (OFF signal herein) is input into the driving motor 401, the small gears 402, the large gears 403 and the semi-circular gear 404 start rotation. When this rotation is started, as the lower section of the separating member 104b has turned OFF the ON/OFF detection sensor 407, the sensor OFF signal is output from the ON/OFF detection sensor 407 to the driving motor 401.

In association of rotation of the driving motor 410, the semi-circular gear 404 engaging the gear section 406 rotates, and the separating member 104b moves upward once, but the separating member 104b now engaging nothing drops along the rail member 405, and the lower section of the separating member 104b turns ON the ON/OFF detection sensor 407. With this operation, a sensor ON signal is output from the ON/OFF detection sensor 407 to the driving motor 401.

The driving motor 401 stops its rotation when the sensor ON signal is input thereinto. In other words, the driving motor 401 stops with the separating member 104b having been moved downward.

With the configuration and operations as described above, the driving motor 401 achieves moving the separating member 104b in the vertical direction with the required minimum driving time, which contributes to reduction of power consumption.

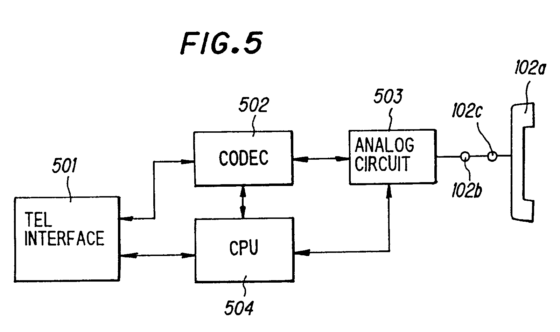

Fig. 5 shows general configuration of the corded telephone set 102. The corded telephone set 102 comprises an interface circuit 501 for executing communication following a communication protocol for the digital PBX 101 and/or communication with a digital telephone line, a CODEC circuit (CODEC) 502 for converting a digital signal input from a digital line to an analog signal, an analog circuit 503 for inputting thereto from or outputting an analog signal to the handset 102a, and a CPU 504 controlling communication following the communication protocol for the digital PBX as well as for controlling each of the components described above.

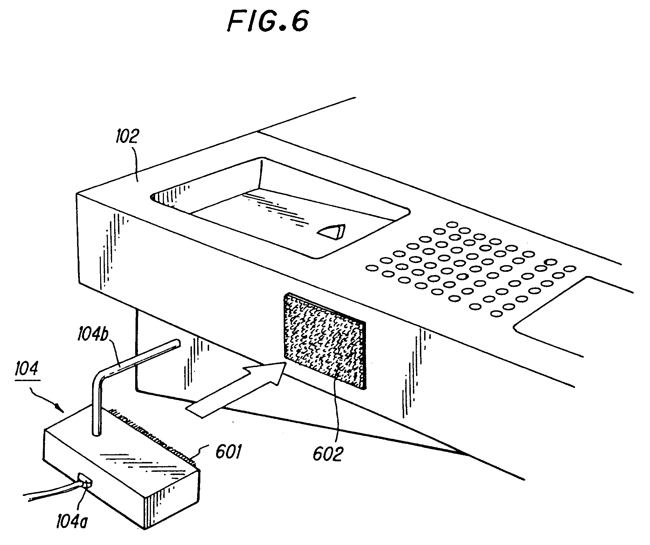

Then description is made for a method of mounting the hook switch ON/OFF device 104 onto the corded telephone set 102 with reference to Fig. 6. At first on a surface of the hook switch ON/OFF device 104 contacted to the corded telephone set 102 is adhered a Velcro(R) fastener 601, then a position where the separating member 104b is located between the handset 102a and the base unit of the corded telephone set 102 and also the hand set 102 can turn ON/OFF the hook switch in association with vertical movement of the separating member 104b is found, a Velcro(R) fastener 602 is adhered at the corresponding section on the surface of the corded telephone set 102, and the hook switch ON/OFF device 104 is fixed to the corded telephone set 102 with the Velcro(R) fasteners 601 and 602.

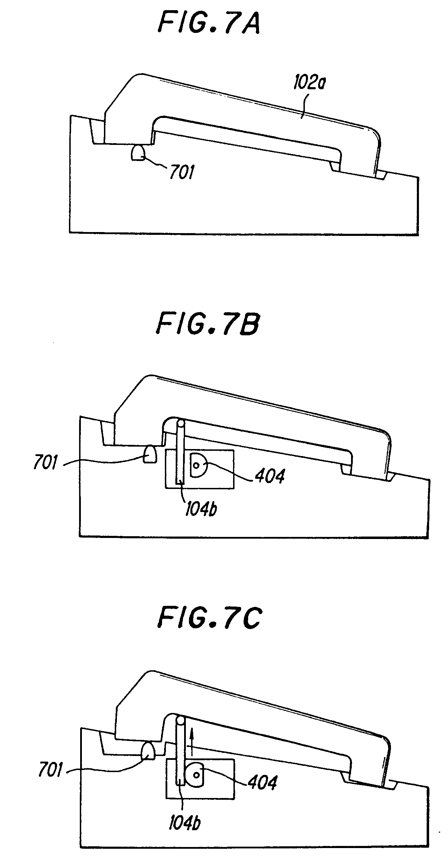

With the configuration as described above, now description is made for operations in Embodiment 1. Fig. 7A shows a state where the hook switch ON/OFF device 104 has not been mounted and the handset 102a has turned on the hook switch 701 in the corded telephone set 102. Fig. 7B shows a state where the took switch ON/OFF device 104 has been mounted and the handset 102a has turned ON the hook switch 701 in the corded telephone set 102. Fig. 7C shows a state where the handset 102a is raised by the separating member 104 and the hook switch 701 has been turned OFF.

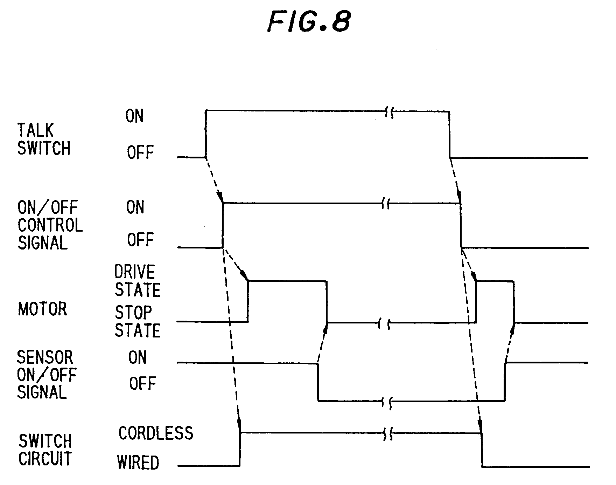

Fig. 8 shows a timing chart in Embodiment 1. When a user sends voice messages using the handset 103b of the analog cordless telephone set 103, at first the user turns ON the talk switch 308 as shown in the timing chart in Fig. 8, an ON/OFF control signal is output from the CPU 305 in response to ON of the talk switch 308, and a line connection is switched from the handset 102a of the corded telephone set 102 to the basic system 103a of the analog cordless telephone set 103. Also an ON/OFF control signal is output from the analog cordless telephone 103 to the hook switch ON/OFF device 104.

When the ON/OFF control signal (ON signal herein) is input into the hook switch ON/OFF device 104, rotation of the driving motor is started. When the driving motor 401 rotates, the separating member 104b goes upward, and when the sensor ON/OFF signal (OFF signal herein) is output from the ON/OFF detection sensor 407, rotation of the driving motor 410 is stopped. The hook switch is set in the OFF state as shown in Fig. 7C, and it becomes possible for the user to send voice messages using the analog cordless telephone 103.

When the call is over and the user turns OFF the talk switch 308, an ON/OFF control signal is output from the CPU 305 in response to OFF state of the talk switch 308, and the line connection is switched by the switch circuit 301c from the base unit 103a of the analog cordless telephone set to the handset 102a of the corded telephone set 102. Also an ON/OFF control signal is output from the analog cordless telephone 103 to the hook switch ON/OFF device 104.

When an ON/OFF control signal (OFF signal herein) is input into the hook switch ON/OFF device 104, rotation of the driving motor 401 is started. When the driving motor 401 rotates, the separating member 104 drops, and when a sensor ON/OFF signal (ON signal herein) is output from the ON/OFF detection sensor 407, rotation of the driving motor 401 is stopped. Then, the hook switch 701 is set in ON state as shown in Fig. 7C, and the call is terminated.

It should be noted that a timing for the driving motor 401 to stop rotation should preferably be in a time zone after the driving motor 401 continues its rotation during a period since the semi-circular gear 404 gets away from the gear section 406 and starts rotation until the semi-circular gear 404 again contacts the gear section, by, for instance, delaying a timing of output of ON signal from the detection sensor 407. With this, an operation time required for increasing the separating member 104b next time can be reduced.

As described above, in Embodiment 1, even if the digital corded telephone set 102 is connected to the digital PBX 101, it can be used by connecting an analog cordless telephone set 103. Especially by using the hook switch ON/OFF device 104, the hook switch of the corded cordless telephone set 102 is automatically turned ON/OFF according to operation of the talk switch 308 of the analog cordless telephone set 103, the analog cordless telephone set 103 can be used like an ordinary cordless telephone set without being aware of the fact that the telephone system is connected to the corded telephone set 102.

### [Embodiment 2]

In Embodiment 2, a ringer sound detecting means for detecting a ringer sound of the corded telephone set 102 is connected to the analog cordless telephone set 103. It should be noted that the basic portions and operations in Embodiment 2 are the same as those in Embodiment 1, so description is made only for different portions herein.

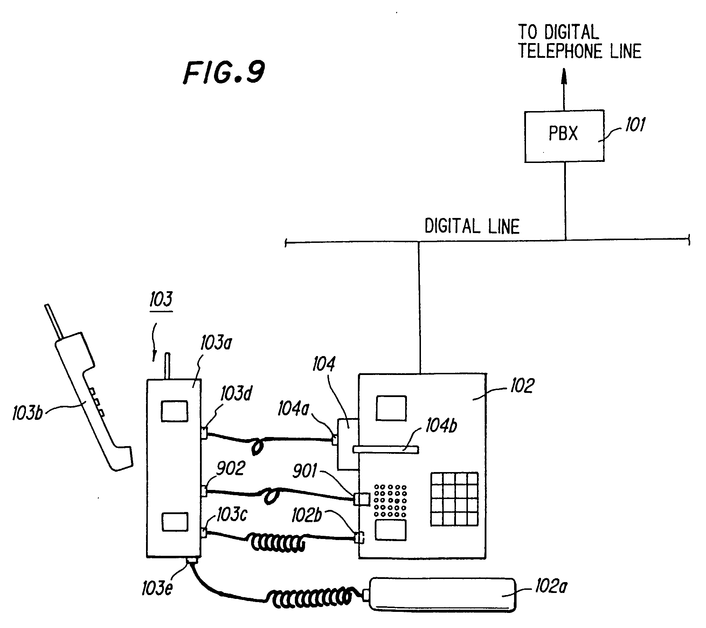

Fig. 9 shows configuration of a telephone system according to Embodiment 2 of the present invention, and in this telephone system a microphone 901 for detecting a ringer sound is provided in a speaker section of the corded telephone set 102, and a signal input terminal 902 for inputting a signal from the microphone 901 thereinto is provided in the analog cordless telephone set 103.

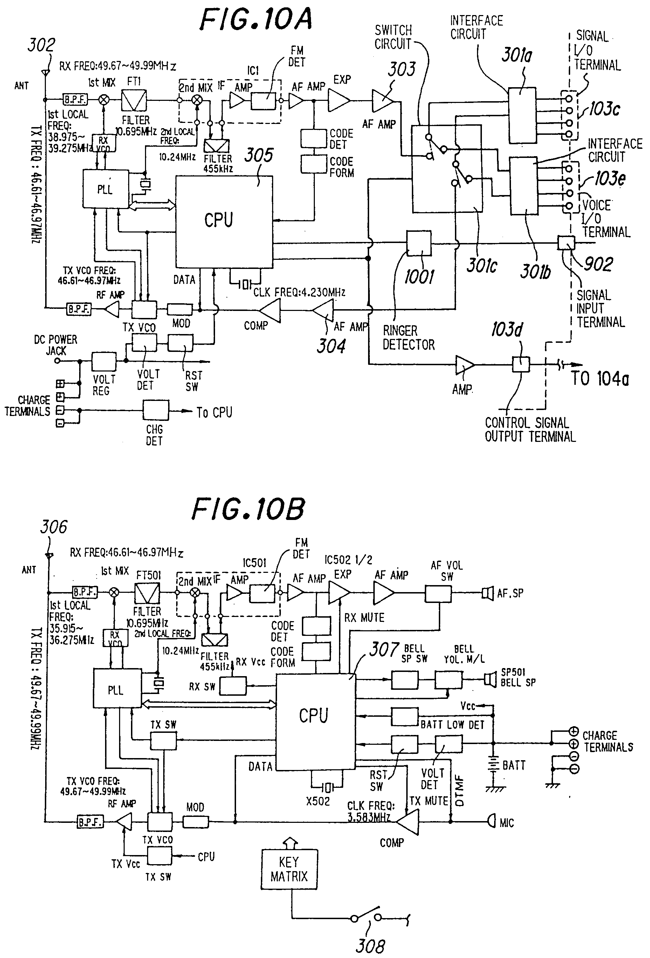

Fig. 10a and 10b are circuit diagrams of the analog cordless telephone set according to Embodiment 2, and a ringer detector 1001 for judging whether a signal via the signal input terminal 902 input into the microphone 901 is a ringer sound or not is provided therein. When the CPU 305 is reported from the ringer detector that the signal is a ringer sound, the CPU 305 notifies the CPU 307 of the handset 103b of it, and a ringer sound is output from a speaker of the handset 103b.

Also, in the circuit diagram for Embodiment shown in Fig. 3, 2 signal lines each for outputting an ON/OFF control signal from the CPU 305 are provided therein, but in Embodiment 2, as shown in the figure, one signal line is drawn from the CPU 305, and an ON/OFF control signal corresponding to the talk switch 302 is output through this signal line to the switch circuit 301c and the control signal output terminal 103d.

In Embodiment 2, in addition to effects in Embodiment 1, a ringer sound is output from a speaker of the analog cordless telephone set 103 when a ringer sound from the corded telephone set 102 is detected, even at a place away from the corded telephone set 102, if the place is within a range of radio communication of the analog cordless telephone set 103, a user can catch a ringer sound when an incoming call is placed, and the user will never miss in reacting to the incoming call.

Although a ringer sound is detected by the microphone 901 in Embodiment 2, there is no specific restriction over this detecting mechanism, and for instance vibration caused by a ringer sound may be detected, or both a ringer sound and vibration caused by the ringer sound may be detected. By the way, the detected ringer sound can be given in the form of voice or data to the handset 103b.

### [Embodiment 3]

In Embodiment 3 of the present invention, a method of mounting the hook switch ON/OFF device 104 is different from that in the telephone system according to Embodiment 1. In Embodiment 1, the hook switch ON/OFF device is fixed to the corded telephone set with a Velcro(R) fastener, but in Embodiment 3, the hook switch ON/OFF device is fixed to a base unit of the corded telephone set 102 with a tightening tool.

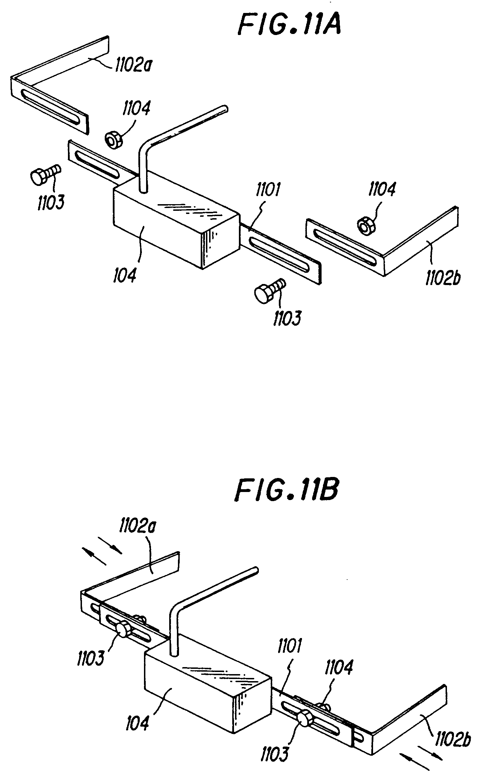

Fig. 11a and 11b are explanatory drawings illustrating a method of the hook switch ON/OFF device 104 in Embodiment 3. A first fixing member 1101 with a groove section for adjusting a length provided therein and previously fixed to the hook switch ON/OFF device 104, L-shaped second fixing members 1102a, 1102b each with a groove section for adjusting a length, and a screw 1103 and a nut 1104 for connecting the first fixing member to the second fixing members 1102a and 1102b are used for this purpose.

At first, the second fixing members 1102a and 1102b are contacted to a base unit of the corded telephone set so that the hook switch ON/OFF device is located at a desired position on the corded telephone set 102, and then the first fixing member and the fixing members 1102a and 1102b are connected with the screw 1103 and the nut 1104.

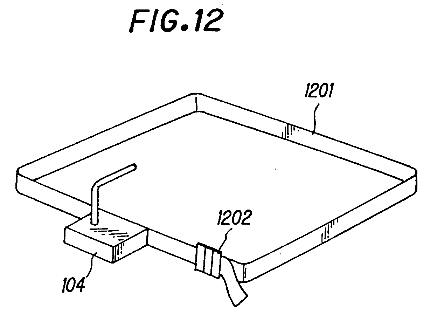

Fig. 12 shows an example of a variation of the mounting method in Embodiment 3, and in this example the hook switch ON/OFF device 104 is fixed by tightening the base unit of the corded telephone set with a belt 1201 and a fastener 1202.

### [Embodiment 4]

In Embodiment 4 of the present invention, a hook switch ON/OFF device directly located between the base unit of the corded telephone set 102 and the handset 102a thereof is used in place of the hook switch ON/OFF device 104 in Embodiment 1. It should be noted that the basic configuration and operation of Embodiment 4 are the same as those in Embodiment 1, and that only different points are described herein.

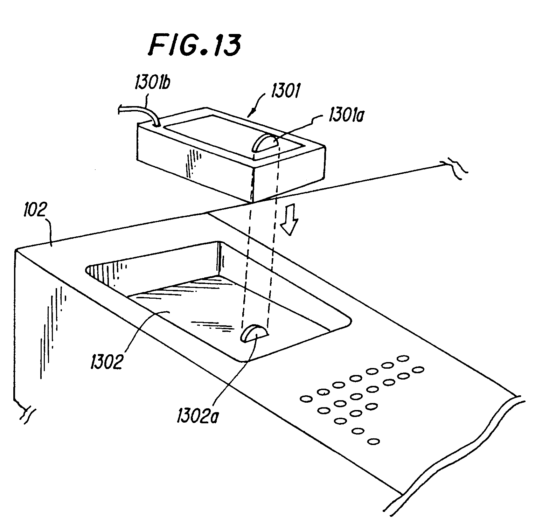

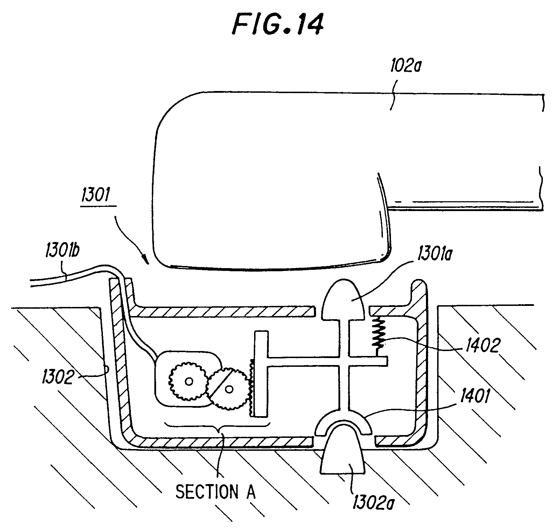

Fig. 13 and Fig. 14 are explanatory drawings each illustrating configuration of a hook switch ON/OFF device 1301 in Embodiment 4. As shown in Fig. 13, the hook switch ON/OFF device 1301 has a box-like form, and a hook switch 1302a of the corded telephone set 102 is accommodated in a concave section 1302 provided therein. Also in this figure, the reference numeral 1301a indicates a hook switch in the hook switch ON/OFF device 1301, and as described later, this hook switch has a role as a separating member for moving the handset 102a upward and turning OFF the hook switch 1302a and a role as a moving member for turning ON the hook switch 1302a making use of the weight of the handset 102a when a talk switch of the analog cordless telephone set 103 has not been turned ON.

Furthermore the reference numeral 1301b indicates a line for inputting an ON/OFF control signal from the analog cordless telephone set 103.

As shown in Fig. 14, in a lower section of the hook switch 1301a is provided a contacting section 1401 contacting the hook switch 1302a with the hook switch ON/OFF device 1301 accommodated in the concave section 1302, and also a spring 1402 for reducing a weight loaded to the hook switch 1302a is provided so that the hook switch 1302a of the corded telephone set 102 is not turned ON by the weight of the hook switch 1301a.

Furthermore, like in Embodiment 1, a portion of the hook switch 1301a is connected to a section A comprising the driving motor 401, small gear 402, large gear 403, semi-circular gear 404, rail member 405, gear section 406, ON/OFF detection sensor 407, and stopper 408.

With the configuration described above, now description is made for operations in this embodiment. In Fig. 14, when the handset 102a turns ON the hook switch 1301a, the hook switch 1302a is pressed by the contacting section 1401 and is turned ON.

In this state, when a user turns ON a talk switch of the analog cordless telephone set 103, the hook switch 1301a is moved upward by the section A having the same configuration as that in Embodiment 1, and the hook switch 1302a is released and turned OFF.

Then, when the user turns OFF the talk switch of the analog cordless telephone set 103, engagement of the hook switch 1301a is released by the section A having the same configuration as that in Embodiment 1, the hook switch 1301a drops due to the weight of the handset 102a, and the hook switch 1302a is pressed by the contacting section 1401 and turned ON.

On the other hand, when a talk switch of the analog cordless telephone set 103 is OFF, in a state where the handset 102a has been removed, the hook switch 1301a is pulled up by the spring 1402, and the hook switch 1302a is released and turned OFF.

With Embodiment 4, in addition to effects like those in Embodiment 1, a number of parts for mounting the hook switch ON/OFF device 1301 can be reduced.

Although not shown in the figure, it is recommended to provide a filler member for fixing the hook switch ON/OFF device between the concave section 1302 and the hook switch ON/OFF device 1301.

Also in the configuration shown in Fig. 14, the hook switch 1302a can automatically be turned ON/OFF whether or not the handset exists, by omitting a section from the hook switch 1301a to a position where contacting the handset 102a, and leaving only the contact section 1401, and moreover by using a motor which can rotate in the regular and reverse directions as a driving motor and also using a circular gear in place of the semi-circular gear in Section A.

### [Embodiment 5]

Embodiment 5 of the present invention is an example in which the hook switch ON/OFF device 104 is attached to the analog cordless device 103. The basic configuration is the same as that of Embodiment 1, so that description is made for only different points herein.

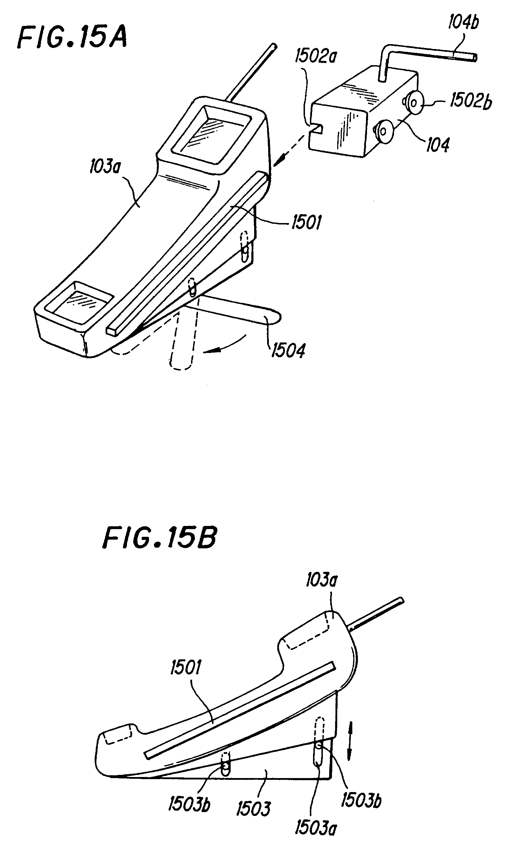

Fig. 15A and Fig. 15B show configuration of the base unit 103a of the analog cordless telephone set 103 and the hook switch ON/OFF device 104 respectively, and in the base unit 103a is provided a rail 1501 for supporting and fixing the hook switch ON/OFF device 104. Also in the hook switch ON/OFF device 104 are provided an engaging section 1502a for engaging the rail member 1501 and supporting the hook switch ON/OFF device 104 and a suction cup 1502b for fixing the hook switch ON/OFF device 104 and the base unit 103a to the corded telephone set 102.

It should be noted that, if there are some irregularities in the base unit of the corded telephone set 102 which the suction cup 1502b contacts, or if such a process as surface roughing has been applied to the surface of the base unit of the corded telephone set 102, the suction cup 1502b can be caused to seal to the corded telephone set by, for instance, adhering such a material as seal on the base unit of the corded telephone set 102.

Also in the lower section of the base unit 103a is provided an arm 1504 rotatably mounted thereto, and when the base unit 103a is located in parallel to the corded telephone set 102, this arm 1054 is pulled out to a position indicated by a solid line in Fig. 15A, and the corded telephone set 102 is mounted on it. With this configuration, it becomes possible to prevent the basic body 103a from moving or displacing when the separating member 104b for the hook switch ON/OFF device 104 goes up. Also the suction cup 1502b prevents the base unit 103a from moving or displacing.

Furthermore in the base unit 103a is provided an adjusting bench 1503 for adjusting height and inclination of the base unit 103a. Substantially as shown in Fig. 15B, the height and inclination are adjusted by inserting screws 1503b into two screw holes 1503a formed on the adjusting bench 1503 and tightening the screws.

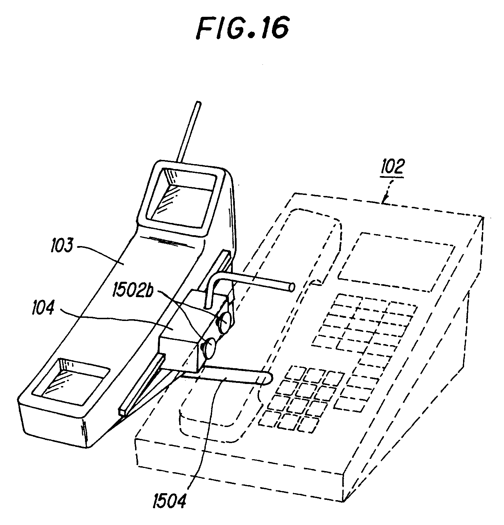

With this adjusting mechanism the rail 1501, as shown in Fig. 16, the separating member 104b for the hook switch ON/OFF device 104 can be located under the handset 102b at a position suited to its movement in the vertical direction, irrespective of a type of the corded telephone set 102.

### [Embodiment 6]

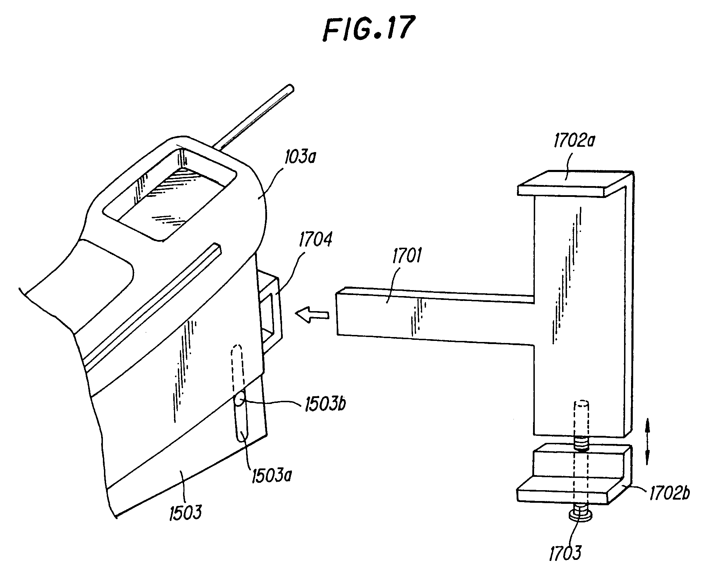

In Embodiment 6 of the present invention, the analog cordless telephone set 103 is fixed to the corded telephone set 102 by using a tightening tool as shown in Fig. 17 in place of the suction cup 1502b and the arm 1504 used in Embodiment 5, which prevents the base unit 103a from moving or displacing when the separating member 104b for the hook switch ON/OFF device 104 goes up.

Fig. 17 shows a tightening tool used in Embodiment 6 comprising an arm 1701, a tightening section 1702a integrated to the arm 1701, a tightening section 1702b independent from the arm 1701, and a screw 1703 for connecting and tightening the tightening section 1702a to the tightening section 1702b. Also in the base unit 103a is provided an engaging section 1704 into which the arm 1701 is engaged.

With the configuration as described above, the arm 1701 is fixed to the corded telephone set 102 by holding the corded telephone set 102 between the tightening section 1702a and the tightening section 1702b and tightening the screw 1703.

Then the arm 1701 is engaged into the engaging section 1704, when the analog cordless telephone set 103 is connected and fixed to the corded telephone set 102, which prevents the base unit 103a from moving or displacing when the separating member 104b for the hook switch ON/OFF device goes up.

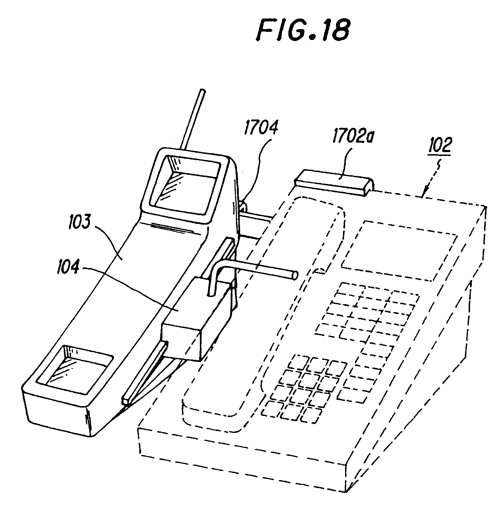

Fig. 18 shows a state where the analog cordless telephone set 103 has been connected and fixed to the corded telephone set 102 with the tightening tool shown in Embodiment 6.

As described above, in a telephone system according to the present invention, voice messages are sent and received using an analog cordless telephone set by operating a talk switch of an analog cordless a hook switch ON/OFF device working according to an ON/OFF control signal correlating to the talk switch to turn ON/OFF a hook switch of the corded telephone set, and for this reason a cordless telephone set which can be available at a reasonable price can be connected thereto and used even in a case where digital corded telephone set is connected to a digital line or a digital PBX.

In a telephone system according to the present invention, voice messages are sent and received using an analog cordless telephone set by operating a talk switch of the analog cordless telephone set and using a hook switch ON/OFF device working according to an ON/OFF control signal correlating to the talk switch to turn ON/OFF the hook switch of the corded telephone set, and for this reason, a cordless telephone set can be connected thereto and used even in a case where a digital corded telephone set is connected to a digital line or a digital PBX, and at the same time the corded telephone set can be used as usual.

In a telephone system according to the present invention, voice messages are sent and received between a corded telephone set and an analog cordless telephone set by changing an array of a plurality of signal lines input via a signal I/O terminal to an array of signal lines which can be processed by the analog cordless telephone with an interface means of the analog cordless telephone set and also changing an array of signal lines output via the signal I/O terminal to an array of signal lines which can be processed by telephone set, and for this reason a cordless telephone set can be connected thereto and used even in a case where a digital corded telephone set is connected to a digital line or a digital PBX, and at the same time the corded telephone set can be used as usual.

In a telephone system according to the present invention, voice messages are sent and received through radio communication between a handset of an analog cordless telephone set and a base unit of the analog cordless telephone set and also voice messages are sent and received between the analog cordless telephone set and a corded telephone set through corded communication via a voice I/O terminal of the corded telephone set and a signal I/O terminal of the corded telephone set, and for this reason a cordless telephone set can be connected thereto and used even in a case where a digital corded telephone set is connected to a digital line or a digital PBX.

In a telephone system according to the present invention, voice messages are sent and received using an analog cordless telephone set by operating a talk switch of an analog cordless telephone set and also using a call/non-call shifting means to switch operating mode of a corded telephone set to a calling state or a non-calling state and a ringer sound is output from the analog cordless telephone set when a ringer sound is detected by the corded telephone set and the incoming call is accepted, and for this reason a cordless telephone set can be connected thereto and used even in a case where a digital corded telephone set is connected to a digital line or a digital PBX, and at the same time a ringer sound can be heard without fail.

In a telephone system according to the present invention, a ringer sound is detected by detecting a sound or vibration from a corded telephone set with a ringer sound detecting means, and for this reason the ringer sound can be heard without fail.

In a hook switch ON/OFF method in a telephone system according to the present invention, a separating member for releasing a handset from a hook switch is provided between a base unit of a corded telephone set and the handset thereof and the hook switch of the corded telephone set is turned ON/OFF by releasing/placing the handset from/on the hook switch with the separating member according to a signal from the talk switch of the analog cordless telephone set, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, the hook switch is turned ON/OFF by moving the separating member provided between a base unit of a corded telephone set and a handset thereof in the vertical direction to release the handset from the hook switch according to a signal from a talk switch of an analog cordless telephone set, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, a frame with a separating member, a solenoid, and a driving motor packaged therein by a fixing means is fixed at a position near a handset of a corded telephone set, and for this reason it is very easy to mount the hook switch ON/OFF device.

In a telephone system according to the present invention, voice messages are sent and received using a second telephone set by operating a talk switch of the second telephone set which can not sent nor received voice messages following the digital PBX communication protocol and using a call/non-call shifting means to switch operating mode of a first telephone set which can send and receive voice messages following the digital PBX protocol to a calling state or a non-calling state, and for this reason a cordless telephone set can be connected thereto and used even in a case where a digital corded telephone set is connected to a digital line or a digital PBX.

In a telephone system according to the present invention, voice messages are sent and received (first call) using a second telephone set by operating a talk switch of a second telephone set which can not send nor receive voice messages following the digital PBX communication protocol and using a call/non-call shifting means to switch operating mode of a first telephone set which can send and receive voice messages following the digital PBX communication protocol. Also voice messages are sent and received using a handset of the first telephone set (second call), and for this reason a cordless telephone set can be connected thereto and used even in a case where a digital corded telephone set is connected to a digital line or a digital PBX, and at the same time the corded telephone set can be used as usual.

In a telephone system according to the present invention, an array of a plurality of signal lines input via a signal I/O terminal is changed to an array of signal lines processable by the analog cordless telephone with an interface means in a second telephone set, and an array of signal lines output via the signal I/O terminal to an array of signal lines processable by a first telephone set, and for this reason a cordless telephone set can be connected thereto and used even in a case where a digital corded telephone set is connected to a digital line or a digital PBX, and at the same time the corded telephone set can be used as usual.

In a telephone set according to the present invention, in sending and receiving voice messages using said second telephone set, the voice messages are sent and received through radio communication between a handset of said second telephone set and the base unit thereof, and in sending and receiving voice messages between said second telephone set and a first telephone set, the voice messages are sent and received through corded communication via a voice I/O terminal of said first telephone set and a signal I/O terminal of the first telephone set, and for this reason a cordless telephone set can be connected thereto and used even in a case where a digital corded telephone set is connected to a digital line or a digital PBX.

In a telephone system according to the present invention, voice messages are sent and received using a second telephone set by operating a talk switch of the second telephone set which can not send nor receive voice messages following the digital PBX communication protocol and using a call/non-call shifting means to switch operating mode of the first telephone set which can send and receive voice messages following the digital PBX protocol, and a ringer sound from the second telephone set is output when a ringer sound from the first telephone set is detected and the incoming call is accepted, and for this reason a cordless telephone set can be connected thereto and used even in a case where a digital corded telephone set is connected to a digital line or a digital PBX, and at the same time the ringer sound can be heard without fail.

In a telephone system according to the present invention, a ringer sound is detected by detecting a sound or vibration from a first telephone set with a ringer sound detecting means, and for this reason the ringer sound can be heard without fail.

In a hook switch ON/OFF method in a telephone system according to the present invention, a separating member for releasing a handset from a hook switch is provided between a base unit of a first telephone set which can send and receive voice messages following the specific digital PBX communication protocol, and the hook switch of the first telephone set is turned ON/OFF by releasing/placing the handset from/on the hook switch with the separating member according to a signal from a talk switch of a second telephone set which can not send nor receive voice messages following the digital PBX communication protocol, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, the hook switch is turned ON/OFF by moving in the vertical direction the separating member provided between a base unit of a first telephone set which can send and receive voice messages following the specific digital PBX communication protocol to release the handset from the hook switch with the separating member according to a signal from a talk switch of a second telephone set which can not send nor receive voice messages following the digital PBX communication protocol, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, the hook switch is turned ON/OFF by moving in the vertical direction a separating member provided between a base unit of a first telephone set which can send and receive voice messages following the specific digital PBX communication protocol to release the handset from the hook switch with the separating member according to a signal from a talk switch of a second telephone set which can not send nor receive voice messages following the digital PBX communication protocol. Also a frame with a separating member, a solenoid, and a driving motor packaged therein is fixed at a position near the handset of the first telephone set with a fixing means, and for this reason a cordless telephone set can be connected thereto and used even in a case where a digital corded telephone set is connected to a digital line or a digital PBX.

In a telephone system according to the present invention, voice messages are sent and received using a second telephone set by operating a talk switch of the second telephone set not having a CODEC function for converting a digital signal input from a digital line to an analog signal and using a call/non-call shifting means to switch operating mode of a first telephone set having the CODEC function for converting a digital signal input from a digital line to an analog signal to a calling state or a non-calling state, and for this reason a cordless telephone set can be connected thereto and used even in a case where a digital corded telephone set is connected to a digital line or a digital PBX, and for this reason a cordless telephone set can be connected thereto and used even in a case where a digital corded telephone set is connected to a digital line or a digital PBX. In a telephone system according to the present invention, voice messages are sent and received (first call) using a second telephone set by operating a talk switch of a second telephone set not having a CODEC function for converting a digital signal input from a digital line to an analog signal and using a call/non-call shifting means to switch operating mode of a first telephone set having the CODEC function for converting a digital signal input from a digital line to an analog signal. Also voice messages are sent and received using the handset of the first telephone set (Second call), and for this reason a cordless telephone set can be connected thereto and used even in a case where a digital corded telephone set is connected to a digital line or a digital PBX, and at the same time the corded telephone set can be used as usual. In a telephone system according to the present invention, an array of a plurality of signal lines input via a signal I/O terminal is changed to an array of signal lines processable by the analog cordless telephone by an interface means of a second telephone set not having a CODEC function for converting a digital signal input from a digital line to an analog signal, and also an array of signal lines output via the signal I/O terminal are changed to an array of signal lines processable by a first telephone set, and for this reason a cordless telephone set can be connected thereto and used even in a case where a digital corded telephone set is connected to a digital line or a digital PBX, and at the same time the corded telephone set can be used as usual.

In a telephone system according to the present invention, in sending and receiving voice messages using a second telephone set not having a CODEC function for converting a digital signal input from a digital line to an analog signal the voice messages are sent and received through radio communication between a handset of the second telephone set and a base unit thereof, and in sending and receiving voice messages between the second telephone set and the first telephone set, the voice messages are sent and received through corded communication via an voice I/O terminal of the first telephone set and a signal I/O terminal thereof, and for this reason a cordless telephone set can be connected thereto and used even in a case where a digital corded telephone set is connected to a digital line or a digital PBX.

In a telephone system according to the present invention, voice messages are sent and received (first call) using a second telephone set by operating a talk switch of a second telephone set not having a CODEC function for converting a digital signal input from a digital line to an analog signal and using a call/non-call shifting means to switch operating mode of a first telephone set having the CODEC function for converting a digital signal input from a digital line to an analog signal, and a ringer sound is output from the second telephone set when a ringer sound from the first telephone set is detected and the incoming call is accepted, and for this reason a cordless telephone set can be connected thereto and used even in a case where a digital corded telephone set is connected to a digital line or a digital PBX, and at the same time the ringer sound can be heard without fail.

In a telephone system according to the present invention, a ringer sound is detected by detecting a sound or vibration from a first telephone set with a ringer sound detecting means, and for this reason the ringer sound can be heard without fail.

In a hook switch ON/OFF method in a telephone system according to the present invention, a hook switch of a first telephone set having a CODEC function for converting a digital signal input from a digital line to an analog signal is turned ON/OFF by releasing a handset from a hook switch with a separating member according to a signal from a talk switch of a second telephone set having the CODEC function for converting a digital signal input from a digital line to an analog signal, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, a hook switch is turned ON/OFF by moving in the vertical direction a separating member provided between a base unit of a first telephone set having a CODEC function for converting a digital signal input from a digital line to an analog signal and a handset thereof to release the handset from the hook switch with the separating means according to a signal from a talk switch of a second telephone set not having the CODEC function for converting a digital signal input from a digital line to an analog signal, and for this reason a cordless telephone set can be connected thereto and used even in a case where a digital corded telephone set is connected to a digital line or a digital PBX, and at the same time a hook switch of the corded telephone set can be turned ON/OFF automatically, which provides higher convenience.

In a hook switch ON/OFF device in a telephone system according to the present invention, a hook switch is turned ON/OFF by moving in the vertical direction a separating member provided between a base unit of a first telephone set having a CODEC function for converting a digital signal input from a digital line to an analog signal to release the handset from the hook switch with the separating member according to a signal from a talk switch of a second telephone set not having the CODEC function for converting a digital signal input from a digital line to an analog signal. Also a frame with a separating member, a solenoid, and a driving motor packaged therein is fixed at a position near a handset of the first telephone set with a fixing means, and for this reason a cordless telephone set can be connected thereto and used even in a case where a digital corded telephone set is connected to a digital line or a digital PBX.

In a hook switch ON/OFF device in a telephone system according to the present invention, a frame is fixed at a position near a handset of a first telephone set with a fixing means comprising a Velcro(R) fastener, and for this reason it is easy to mount the hook switch ON/OFF device.

In a telephone system according to the present invention, the hook switch ON/OFF device is monolithically molded with or integrated to an analog cordless telephone set or a second telephone set, and by mounting the analog cordless telephone set or the second telephone set near a corded telephone set or a first telephone set, the separating means can be located under the handset thereof, and for this reason it is very easy to mount the hook switch ON/OFF device.

In a telephone system, according to the present invention, the hook switch ON/OFF device is engaged in an engaging section formed in an analog cordless telephone set or a second telephone set, thus the hook switch ON/OFF device being integrated to the telephone set, and for this reason it is very easy to mount the hook switch ON/OFF device.

Although the invention has been described with respect to a specific embodiment, for a complete and clear disclosure, the appended claims are not to be thus limited but are to be construed as embodying all modifications and alternative constructions that may occur to one skilled in the art which fairly fall within the basic teaching herein set forth.

## Claims

1. A telephone system adapted to be incorporated with a corded telephone connected to a telephone line, the corded telephone having a voice I/O terminal and a hook switch therein, said telephone system comprising: an analog cordless telephone having a signal I/O terminal connected to the voice I/O terminal, a talk switch, adapted to be operated by an operator, outputting a talk control signal so as to activate said analog cordless telephone, and a control signal output circuit to output an ON/OFF control signal having a first and second states in response to the talk signal, the ON/OFF control signal being in the first state under the presence of the talk control signal, otherwise the ON/OFF control signal being in the second state; a hook switch ON/OFF control device having a control signal input terminal to receive the ON/OFF control signal output from said control signal output circuit, said hook switch ON/OFF control device making the hook switch in an OFF state upon the ON/OFF control signal being in the first state, said hook switch ON/OFF control device making the hook switch in an ON state upon the ON/OFF control signal being in the second state; and whereby said analog cordless telephone may communicate with another telephone over the telephone line through said signal I/O terminal and the corded telephone.

2. A telephone according to claim 1, wherein said analog cordless telephone has an interface circuit changing an array of a plurality of signal lines input via said signal I/O terminal to an array of signal lines processable by said analog cordless telephone and also changing an array of signal lines output via said signal I/O terminal to an array of signal lines processable by the corded telephone.

3. A telephone system according to claim 1, wherein in sending and receiving voice using said analog cordless telephone voice messages are sent and received through radio communication between a handset of said analog cordless and a base unit of the analog cordless telephone and in sending and receiving voice between said analog cordless telephone set and said corded telephone voice messages are sent and received through a cable connecting the voice I/O terminal of said corded telephone with the signal I/O terminal of said analog cordless telephone.

4. A telephone system according to claim 1, wherein said hook switch ON/OFF device is monolithically attached to said analog cordless telephone or the corded telephone.

5. A telephone system adapted to be incorporated with a corded telephone connected to a telephone line, the corded telephone having a voice I/O terminal and a hook switch therein, said telephone system comprising: an analog cordless telephone having a signal I/O terminal connected to the voice I/O terminal, a talk switch, adapted to be operated by an operator, outputting a talk control signal so as to activate said analog cordless telephone, a control signal output circuit to output an ON/OFF control signal having a first and second states in response to the talk signal, the ON/OFF control signal being in the first state under the presence of the talk control signal, otherwise the ON/OFF control signal being in the second state and a voice I/O terminal to which a handset of said corded telephone is connected; a hook switch ON/OFF control device having a control signal input terminal to receive the ON/OFF control signal output from said control signal output circuit, said hook switch ON/OFF control device making the hook switch in an OFF state upon the ON/OFF control signal being in the first state, said hook switch ON/OFF control device making the hook switch in an ON state upon the ON/OFF control signal being in the second state; and whereby said analog cordless telephone may communicate with another telephone over the telephone line through said signal I/O terminal and the corded telephone and said corded telephone may communicate with another telephone.

6. A telephone according to claim 5, wherein said analog cordless telephone has an interface circuit changing an array of a plurality of signal lines input via said signal I/O terminal to an array of signal lines processable by said analog cordless telephone and also changing an array of signal lines output via said signal I/O terminal to an array of signal lines processable by the corded telephone.

7. A telephone system according to claim 5, wherein in sending and receiving voice using said analog cordless telephone voice messages are sent and received through radio communication between a handset of said analog cordless and a base unit of the analog cordless telephone and in sending and receiving voice between said analog cordless telephone set and said corded telephone voice messages are sent and received through a cable connecting the voice I/O terminal of said corded telephone with the signal I/O terminal of said analog cordless telephone.

8. A telephone system adapted to be incorporated with a corded telephone connected to a telephone line, the corded telephone having a voice I/O terminal and a hook switch therein, said telephone system comprising: an analog cordless telephone having a signal I/O terminal connected to the voice I/O terminal, a talk switch, adapted to be operated by an operator, outputting a talk control signal so as to activate said analog cordless telephone, and an incoming call detecting device, provided near a speaker of said corded telephone, detecting a control signal output circuit to output an ON/OFF control signal having a first and second states in response to the talk signal, the ON/OFF control signal being in the first state under the presence of the talk control signal, otherwise the ON/OFF control signal being in the second state, an incoming call to the corded telephone, a call/non-call shifting device to receive the ON/OFF control signal shift operating mode of said corded telephone to a calling state or a non-calling state according to the received ON/OFF control signal, and whereby said analog cordless telephone may communicate with another telephone by operating a talk switch of said analog cordless telephone and shifting the operating mode of said corded telephone with said ON/OFF shifting device and a ringer sound is output from said analog cordless telephone when the incoming call to the corded telephone is detected.

9. A telephone system according to claim 8, wherein said incoming call detecting device detects the incoming call to the corded telephone by detecting a ringer sound or vibration from the speaker of said corded telephone..

10. A method for communicating with another by telephone system through a corded telephone having a hand set and a base unit connected to each other through a telephone cable, the base unit being connected to a telephone line and having a voice I/O terminal and a hook switch therein, said telephone system including an analog cordless telephone having a signal I/O terminal connected to the voice I/O terminal, a talk switch and a control signal output circuit therein and a hook switch ON/OFF device, said communicating method comprising the steps of:
operating the talk switch so as to generate a talk control signal therefrom;
outputting an ON/OFF control signal in a first state from the control signal output circuit in response to the talk control signal;
making the hook switch in an OFF state by means of the hook switch ON/OFF device in response to the ON/OFF control signal in the first state;
communicating with another by the analog cordless telephone through the corded telephone and the telephone line;
operating the talk switch so as to stop generating the talk control signal therefrom;
outputting the control signal in a second state from the control signal output circuit when the generating of the talk control signal is terminated; and
making the hook switch in an ON state by means of the hook switch ON/OFF device in response to the ON/OFF control signal in the second state.

11. The method according to Claim 10, wherein said hook switch ON/OFF device has a releasing member, further comprising the steps of:
moving the releasing member in response to the ON/OFF control signal, in the step of making the hook switch in the OFF state, so as to release the hand set from the hook switch; and
moving the releasing member in response to the ON/OFF control signal, in the step of making the hook switch in the ON state, so as to place the hand set on the hook switch.

12. The method according to Claim 10, in advance to the step of operating the talk switch so as to generate a talk control signal, comprising the steps of:
detecting an incoming signal to the corded telephone; and activating an alert signal in the analog cordless telephone in response to the detection of the incoming signal.

13. A telephone system comprising a first telephone which can communicate with another telephone following communication protocol for a digital PBX, a second telephone having a signal I/O circuit connected to a voice I/O terminal of said first telephone and a control signal output circuit to output an ON/OFF control signal correlating to a talk switch of the analog cordless telephone, said second telephone being unable to communicate with another telephone following a communication protocol for a digital PBX, and a call/non-call (ON/OFF?) shifting means to receive an ON/OFF control signal output from the control signal output circuit of said second telephone and shift operating mode of said first telephone to an ON state or an OFF state according to the received ON/OFF control signal; and whereby said second telephone may communicate to another telephone by operating a talk switch of said second telephone and switching ON/OFF state of said first telephone with said ON/OFF shifting means.

14. A telephone system according to claim 13, wherein said second telephone has an interface circuit changing an array of a plurality of signal lines input via said signal I/O terminal to an array of signal lines which can be processed by the analog cordless telephone and also changing an array of signal lines output via said signal I/O terminal to an array of signal lines processable by said first analog cordless telephone.

15. A telephone system according to claim 13, wherein in sending and receiving voice messages using said second telephone the voice messages are sent and received through radio communication between the handset of said second telephone and the base unit of said second telephone and in sending and receiving voice messages between said telephone and the first telephone the voice messages are sent and received through a cable connecting the voice I/O terminal of first telephone with the signal I/O terminal of said first telephone.

16. A telephone system according to claim 13, wherein said call/non-call shifting device is monolithically attached to said first telephone or second telephone.

17. A telephone system comprising a first telephone which can communicate with another telephone following a communication protocol for a digital PBX, a second telephone having a signal I/O circuit connected to a voice I/O terminal of said first telephone, a control signal output circuit to output an ON/OFF control signal correlating to the talk switch of the analog cordless telephone and a voice I/O terminal for connecting the handset of said first telephone thereto, said second telephone being unable to communicate with another telephone following a communication protocol for a digital PBX, and a call/non-call (ON/OFF) shifting means to receive an ON/OFF control signal output from the control signal output circuit of said second telephone and shift operating mode of said first telephone to an ON state or an OFF state; and whereby said second telephone may communicate with another telephone by operating a talk switch of said second telephone and switching ON/OFF state of said first telephone with said ON/OFF shifting means and said first telephone may communicate with another telephone through a handset thereof.

18. A telephone system according to claim 17 wherein said second telephone has an interface circuit changing an array of a plurality of signal lines input via said signal I/O terminal to an array of signal lines which can be processed by the analog cordless telephone and also changing an array of signal lines output via said signal I/O terminal to an array of signal lines processable by said analog cordless telephone.

19. A telephone system according to claim 17 wherein in sending and receiving voice messages using said second telephone the voice messages are sent and received through radio communication between the handset of said second telephone and the base unit of said second telephone and in sending and receiving voice messages between said telephone and the first telephone the voice messages are sent and received through a cable connecting the voice I/O terminal of first telephone and the signal I/O terminal of said first telephone.

20. A telephone system comprising a first telephone which can communicate with another telephone following a communication protocol for a digital PBX, a second telephone having a signal I/O circuit connected to a voice I/O terminal of said first telephone, a control signal output circuit to output an ON/OFF control signal in response to a talk switch of the analog cordless telephone, and an incoming call detecting device provided near the handset of said first telephone for detecting a ringer sound of first telephone, said second telephone being unable to communicate with another telephone following a communication protocol for a digital PBX, and a call/non-call (ON/OFF) shifting means to receive an ON/OFF control signal output from the control signal output circuit of said second telephone and shift operating mode of said first telephone to an ON state or an OFF state; and whereby said second telephone may communicate with another telephone by operating a talk switch of said second telephone and switching ON/OFF state of said first telephone with said ON/OFF shifting means, and a ringer sound is output from the said second telephone when a ringer sound from said first telephone is detected and the incoming call is accepted.

21. A telephone system according to claim 20, wherein said incoming call detecting device detects the incoming call to the corded telephone said ringer sound by detecting a ringer sound or vibration from the speaker of said first telephone.

22. A telephone system according to claim 20, wherein said incoming call detecting device detects the incoming call to the corded telephone by vibration from said first telephone.

23. A hook switch ON/OFF method in a telephone system using a second telephone having a signal I/O circuit connected to a voice I/O terminal of first telephone which can communicate with another telephone following a communication protocol for a digital PBX and unable to communicate with another telephone following a communication protocol for a digital PBX, said second telephone being communicated with another telephone via said first telephone; wherein a separating member is provided between the base unit of said first telephone and the handset thereof and a hook switch of said first telephone is turned ON/OFF by separating the handset from the hook switch with said separating member in response to a signal from a talk switch of said second telephone.

24. The method according to Claim 23, wherein said hook switch ON/OFF device has a releasing member, further comprising the steps of:
moving the releasing member in response to the ON/OFF control signal, in the step of making the hook switch in the OFF state, so as to release the hand set from the hook switch; and
moving the releasing member in response to the ON/OFF control signal, in the step of making the hook switch in the ON state, so as to place the hand set on the hook switch.

25. The method according to Claim 24, in advance to the step of operating the talk switch so as to generate a talk control signal, comprising the steps of:
detecting an incoming signal to the corded telephone; and activating an alert signal in the analog cordless telephone in response to the detection of the incoming signal.

26. A telephone system comprising a first telephone having a CODEC function for converting a digital signal input from a digital line to an analog signal, a second telephone having a signal I/O circuit connected to a voice I/O terminal of said first telephone, a control signal output circuit to output an ON/OFF control signal correlating to the talk switch of the analog cordless telephone and not having the CODEC function for converting a digital signal input from a digital line to an analog signal, and a call/non-call (ON/OFF) shifting means to receive an ON/OFF control signal output from the control signal output terminal of said second telephone and shift operating mode of said first telephone to an ON state or an OFF state according to the input ON/OFF control signal; and whereby said second telephone may communicate with another telephone by operating a talk switch of said second telephone and switching ON/OFF state of said first telephone with said ON/OFF shifting means.

27. A telephone system according to claim 26, wherein said second telephone has an interface circuit converting an array of a plurality of signal lines input via said signal I/O circuit to an array of signal lines processable by the analog cordless telephone and also converting an array of signal lines output via said signal I/O circuit to an array of signal lines processable by said analog cordless first telephone.

28. A telephone system according to claim 26, wherein in sending and receiving voice messages using said second telephone the voice messages are sent and received through radio communication between the handset of said second telephone and the base unit of said second telephone and in sending and receiving voice messages between said second telephone and said first telephone the voice messages are sent and received through a cable connecting the voice I/O terminal of said first telephone and the signal I/O terminal of said first telephone.

29. A telephone system according to claim 26, wherein said call/non-call shifting device is monolithically attached to said first telephone or second telephone.

30. A telephone system comprising a first telephone having a CODEC function for converting a digital signal input from a digital line to an analog signal, a second telephone having a signal I/O circuit connected to a voice I/O terminal of said first telephone, a control signal output circuit to output an ON/OFF control signal correlating to the talk switch of the analog cordless telephone and a voice I/O terminal for connecting the handset of said first telephone thereto and not having the CODEC function for converting a digital signal input from a digital line to an analog signal, and a call/non-call (ON/OFF) shifting means to receive an ON/OFF control signal output from the control signal output terminal of said second telephone and shift operating mode of said first telephone to an ON state or an OFF in response to the received ON/OFF control signal; and whereby a first call for sending and receiving voice messages using said second telephone and a second call for sending and receiving voice messages using the handset of said first telephone can be carried out by operating the talk switch of said second telephone with said ON/OFF shifting means to switch operating mode of said first telephone to a ON state or an OFF state.

31. A telephone system according to claim 30, wherein said second telephone has an interface circuit converting an array of a plurality of signal lines input via said signal I/O circuit to an array of signal lines processable by the said analog cordless telephone and also converting an array of signal lines output via said signal I/O circuit to an array of signal lines processable by said first telephone.

32. A telephone system according to claim 30, wherein in sending and receiving voice messages using said second telephone the voice messages are sent and received through radio communication between the handset of said second telephone and the base unit of said second telephone and in sending and receiving voice messages between said second telephone and said first telephone the voice messages are sent and received through a cable connecting via the voice I/O terminal of said first telephone and the signal I/O terminal of said first telephone.

33. A telephone system comprising a first telephone having a CODEC function for converting a digital signal input from a digital line to an analog signal, a second telephone having a signal I/O circuit connected to the voice I/O terminal of said first telephone, a control signal output terminal for outputting an ON/OFF signal correlating to the talk switch of the analog cordless telephone and an incoming call detecting device provided near the speaker of said first telephone and not having the CODEC function for converting a digital signal input from a digital line to an analog signal, and a call/non-call (ON/OFF) shifting means to receive an ON/OFF signal output from the control signal output terminal of said second telephone is input and shift operating mode of said first telephone to an ON state or an OFF state; and whereby said second telephone may communicate with another telephone by operating a talk switch of said second telephone and switching ON/OFF state of said first telephone with said ON/OFF shifting means, and a ringer sound is output from said second telephone when a ringer sound from said first telephone is detected and the incoming call is accepted.

34. A hook switch ON/OFF method in a telephone system sending and receiving voice messages using a second telephone having a signal I/O circuit connected to a voice I/O terminal of said first telephone having a CODEC function for converting a digital signal input from a digital line to an analog signal, and not having the CODEC function for converting a digital signal input from a digital line to an analog signal, said second telephone being communicated with another telephone via said first telephone; wherein a separating member for separating a handset from a hook switch is provided between the base unit of said first telephone and the handset thereof , and a hook switch of said first telephone is turned ON/OFF by separating the handset from the hook switch with said separating means according to a signal from the talk switch of second telephone.

35. The method according to Claim 34, wherein said hook switch ON/OFF device has a releasing member, further comprising the steps of:
moving the releasing member in response to the ON/OFF control signal, in the step of making the hook switch in the OFF state, so as to release the hand set from the hook switch; and
moving the releasing member in response to the ON/OFF control signal, in the step of making the hook switch in the ON state, so as to place the hand set on the hook switch.

36. The method according to Claim 34, in advance to the step of operating the talk switch so as to generate a talk control signal, comprising the steps of:
detecting an incoming signal to the corded telephone; and activating an alert signal in the analog cordless telephone in response to the detection of the incoming signal.

37. A telephone system adapted to be incorporated with a corded telephone connected to a telephone line, said corded telephone having a voice I/O terminal and a hook switch therein, said telephone system comprising: an analog cordless telephone having a first signal I/O terminal connected to the voice I/O terminal, a talk switch, adapted to be operated by an operator, outputting a talk control signal so as to activate said analog cordless telephone, and a control signal output circuit to output a first ON/OFF control signal having a first and second states in response to the talk signal, the first ON/OFF control signal being in the first state under the presence of the talk control signal, otherwise the first ON/OFF control signal being in the second state; a hook switch ON/OFF control device having a control signal input terminal to receive the first ON/OFF control signal output from said control signal output, said hook switch ON/OFF control device making the hook switch in an OFF state upon the first ON/OFF control signal being in the first state, said hook switch ON/OFF control device making the hook switch in an ON state upon the first ON/OFF control signal being in the second state; and whereby said analog cordless telephone may communicate with another telephone over the telephone line through said first signal I/O terminal and the corded telephone.

38. The system according to claim 37, wherein said analog cordless telephone, further, has an interface circuit therein to interface a first communication network with the corded telephone via said first signal I/O terminal and the voice I/O terminal.

39. The system according to claim 38, wherein said analog cordless telephone, further, has a second signal I/O terminal connected to a hand set of the corded telephone; and wherein said interface circuit interfacing a second communication network between the main body and the handset via the voice I/O terminal, the first signal I/O terminal and the second signal I/O terminal.

40. The system according to claim 39, wherein said interface circuit has a switching circuit selecting one of the first and second communication networks so as to be available in response to a second ON/OFF control signal substantially corresponding to the first ON/OFF control signal; said switching circuit selecting the first communication network upon the second ON/OFF control signal being in the first state; and said switching circuit selecting the second communication network upon the second ON/OFF control signal being the second state.

41. The system according to claim 40, wherein the second ON/OFF control signal is identical to the first ON/OFF control signal; the first and second ON/OFF control signals being commonly output from said control signal output circuit.

42. The system according to claim 40, wherein said analog cordless telephone has a mobile handset and a base unit; said mobile handset being equipped with said talk switch therein; and wherein said mobile handset and base unit being communicated each other by radio when the talk signal is output.
